# EUROPEAN PATENT APPLICATION

(11) **EP 3 812 985 A1**
(43) Date of publication of application: **28.04.2021**
(21) Application number: 19204631.6
(22) Date of filing: 22.10.2019
(51) Int. Cl.: G06Q 10/06, G06Q 10/10

(54) **AUTOMATION COMPONENT AND METHOD OF OPERATING THE SAME BASED ON AN ENHANCED INFORMATION MODEL**

(71) Applicant: Siemens Aktiengesellschaft, 80333 München (DE); Friedrich-Alexander-Universität Erlangen-Nürnberg, 91054 Erlangen (DE)
(72) Inventor: Bakakeu Ngassam, Romuald Jupiter, 91054 Erlangen (DE); Bär, Schirin, 90461 Nürnberg (DE); Klos, Hans-Henning, 91249 Weigendorf (DE); Peschke, Jörn, 90489 Nürnberg (DE)

(57) **Abstract**

A first automation component (200a), the first automation component (200a)
comprising: an information model (202a) of the first automation component (202a) and at least a part (203a) of a superordinated information model (402), e.g. a local information model derived from the superordinated information model (402),
wherein the superordinated information (402) model is based on the information model (202a) of the first automation component (200a) and on an information model (403) comprising external knowledge associated with the first automation component (200) and/or an information model (202b) of at least one other automation component (200b), and wherein the first automation component (200a) is operable based on the information model (202a) of the first automation component (200a) and at least the part (203a) of the superordinated information model (402).

## Description

### TECHNICAL FIELD

The present invention relates to automation technology. Automation technology is a branch of plant engineering, which mainly relates to mechanical engineering and electrical engineering. It is used to automate technical processes in machines, plants or technical systems in general.

In addition to relieving people of dangerous, strenuous or routine activities, quality improvements, higher performance of the machine or plant, and reduction of personnel costs are the motivation to use automation techniques. Preferably, human activities are reduced to the elimination of disturbances, material supply, prefabricated parts removal, maintenance and similar work.

### BACKGROUND

Information is nowadays represented as binary data. As a consequence, the terms "information" and "data" can be used interchangeably. However, the problem arises that the same information may have different but equivalent representations. For example, interconnected systems A and B may use different representations. Therefore, to make two or more systems interoperable they should be able to consume data from each other. The OPC Unified Architecture (OPC UA) standard proposes consistent architectures, services and information modeling concepts with the goal to allow vendors to release out-of-the box products ready to be used by engineers.

The OPC Unified Architecture is a standard that allows servers to provide real-time process data, environment metadata and even non-process data to clients, in a unique and platform-independent way. To meet this objective, at runtime each server instantiates and maintains the Address Space that is a collection of data to be exposed to clients. Therefore, OPC UA introduces the following models:
Address Space and Information model to represent structure, behavior, semantics, and infrastructure of the underlying real-time system;
Message model to interact between applications;
Communication models to transfer data over the network; Conformance model to guarantee interoperability between systems;
Security model to guarantee cyber security addressing client/server authorization, data integrity and encryption.

To make the data exposed by the Address Space mutually understandable by different systems, the information model part standardizes the information representation. The information model defines the content of the Address Space of an empty OPC UA server. The solution proposed in this information model is also open to defining vendor specific representations. In "Part 6 - Mappings" of the OPC UA specification mappings between abstract definitions contained in the specification (e.g. in the parts: Information Model, Services, Security Model) and technologies that can be used to implement them are defined.

The OPC UA object model allows servers to provide type definitions for objects and their components. As an example, the OPC UA introduced so called "UA Companion Specifications", e.g. "Adopting Companion Standard Models - Analyzer Devices Integration" for unifying the model for chemical analyzers, cf. https://opcfoundation.org/about/opc-technologies/opcua/ua-companion-specifications/. And although OPC UA specification provides a standard Information Model domain, which contains a set of predefined types and instances this domain may be extended by designing a new one, i.e. defining custom models is enabled.

More information and technical details about OPC UA are available via the OPC FOUNDATION website: https://opcfoundation.org/about/opc-technologies/opc-ua/.

### SUMMARY

In automation systems, such as plants, the need has emerged to exchange information between different automation components of the automation system. However, information models, and the semantics of the information model, for exchanging information are statically programmed and/or statically stored in the automation components. This poses a problem if components implementing different information models, e.g. in dynamic environments of automation systems such as a production plant, are supposed to exchange information. In such a case the semantics of the automation components may not match, and information transfer and/or exchange may be impeded.

According to a first aspect a first automation component is proposed. The first automation component comprising an information model of the first automation component and at least a part of a superordinated information model, e.g. a local information model derived from the superordinated information model. The superordinated information model is based on the information model of the first automation component and on an information model comprising external knowledge associated with the first automation component and/or an information model of at least one second automation component. The first automation component is operable based on the information model of the first automation component and at least the part of the superordinated information model.

According to a second aspect a second automation component is proposed. The second automation component comprising a superordinated information model. The superordinated information model is based on an information model of a first automation component and on an information model comprising external knowledge associated with the first automation component. Additionally or alternatively, the superordinated information model comprises an information model of the second automation component.

According to a third aspect an automation system comprising at least a first automation component is proposed. The automation system comprises at least a second automation component according to the first and/or the second aspect, wherein a plurality of automation components, e.g. according to the first and/or the second aspect, are communicatively coupled to the superordinated information model.

According to a fourth aspect a method for operating a first automation component, preferably for providing interoperability of the first automation component with a second automation component, is proposed. The method comprising the step of obtaining at least part of a superordinated information model, e.g. a local information model derived from the superordinated information model, wherein the superordinated information model is based on an information model of the first automation component and on an information model comprising external knowledge associated with the first automation component and/or an information model of at least one second automation component. The method further comprising the step of operating the first automation component based on the information model of the first automation component and at least the part of the superordinated information model.

According to fifth aspect a method of operating a second automation component, preferably for providing interoperability of the first automation component with a second automation component, is proposed. The method comprising the step of obtaining a superordinated information model, wherein the superordinated information model is based on an information model of a first automation component and on an information model comprising external knowledge associated with the first automation component and/or an information model of the second automation component.

According to a sixth aspect a computer-program product comprising programming means that when executed serve to perform the method steps according to the fourth aspect is proposed.

According to a seventh aspect a computer-program product comprising programming means that when executed serve to perform the method steps according to the fifth aspect is proposed.

According to an eighth aspect a non-transitory medium comprising programming means that when executed serve to perform the method steps of according to the fourth aspect is proposed.

According to a ninth aspect a non-transitory medium comprising programming means that when executed serve to perform the method steps of according to the fifth aspect is proposed.

According to a tenth aspect an apparatus operative to perform any one of the method steps of the fourth aspect is proposed.

According to an eleventh aspect an apparatus operative to perform any one of the method steps of the fifth aspect is proposed.

### BRIEF DESCRIPTION OF THE DRAWINGS

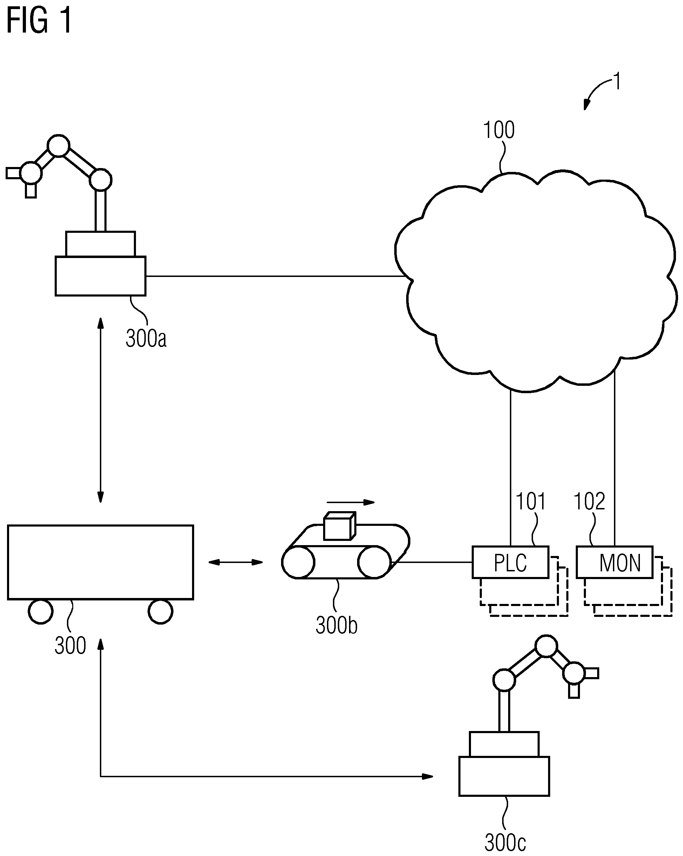

Figure 1 shows a schematic illustration of an automation system.
Figure 2 shows a schematic illustration of a first automation component.
Figure 3 shows a schematic illustration of second automation component.
Figure 4 shows a schematic illustration of automation system according to another embodiment.
Figure 5 shows a schematic illustration of a first automation component according to another embodiment.
Figure 6 shows a schematic illustration of a first automation component according to another embodiment.
Figure 7 shows a schematic illustration of information exchange between two automation components.
Figure 10 shows a schematic illustration of exemplary method steps according to a first embodiment.
Figure 11 shows a schematic illustration of exemplary method steps according to a second embodiment.
Figure 12 shows a schematic illustration of exemplary method steps according to a third embodiment.
Figure 13 shows a schematic illustration of exemplary method steps according to a fourth embodiment.
Figure 14 shows a schematic illustration of exemplary method steps according to a fifth embodiment.
Figure 15 shows a schematic illustration of exemplary method steps according to a sixth embodiment.
Figure 16 shows a schematic illustration of exemplary method steps according to a seventh embodiment.

### DETAILED DESCRIPTION

An (industrial) automation system 1 may comprise a communication network 100 to which a plurality of automation components 101,102, 300, 300a, 300b, 300c are connected. Hence, the automation system 1 may include a plurality of automation components 101, 102, 300, 300a, 300b, 300c. Automation components 300, 300a, 300b, 300c may be implemented in hardware and/or in software and may in particular include programmable logic controllers (PLCs) 101, input / output units (I/O modules) or operating and monitoring stations 102 of the (industrial) automation system 1. Further exemplary automation components may comprise one or more sensors and/or actuators, not shown.

Programmable logic controllers 101 typically each comprise a communication module, a central processing unit and at least one input/output unit. Input/output units can in principle also be designed as decentralized peripheral modules, which are arranged remotely from a memory-programmable controller. Via their communication module, a programmable controller 101 can be connected, for example, to a switch or router or additionally to a fieldbus. The input / output unit is used to exchange control and measurement variables between a programmable logic controller 101 and a sensor or a controlled machine or system 300 connected with the programmable logic controller 101. A sensor or a machine or system 300, 300, 300a, 300b, 300c can in principle also be connected via a radio communication system with a programmable logic controller 101. The central unit of a programmable logic controller 101 is provided in particular for determining suitable control variables from measured variables. The above components of a programmable logic controller 101 can be connected to each other for example via a bus system.

An operator control and monitoring station 102 is used in particular for the visualization of process data or measuring and control variables which are processed or recorded by programmable logic controllers, input / output units or sensors. In particular, an operator control and monitoring station 102 is used to display values of a control loop and to change control parameters. HMI stations 102 include at least a graphical user interface, an input device, a processor unit and a communication module.

The automation system 1 may comprise one or more mobile or stationary automation components, e.g., PLC 101, monitoring unit 102, vehicle 300, robot 300a, 300c or conveyor belt 300b, which, as the case may be, need to exchange information, e.g., control commands, process values, measurement values and/or parameters with each other. In particular the need may arise to exchange information between multiple PLCs. No need to say, that the information exchanged needs to be interpreted according to its proper semantic meaning. To that end, a communication network 100 is provided in the automation system 1 via which the one or more automation components 101, 102, 300, 300a, 300b, 300c may communicate with each other and/or with a processing unit and/or memory, such as database, server and/or cloud, not shown, which may be remotely located with respect to the automation system 1. Hence, information not only needs to be exchanged consistently and in a failsafe way, but the information also needs to be understood, i.e. interpreted according to the intended meaning. This may pose problems when it comes to automation components, such as machines, that have been manufactured by different manufacturers as the semantics used by different manufactures may not coincide.

Usually the interfaces for exchanging information within an automation component 101, 102, 300, 300a, 300b, 300c are predetermined and hardcoded at the time of engineering, e.g. at the time of engineering the automation system 1 in which an automation component is to be used. The functions and/or functionalities of the automation system 1 are mapped on these interfaces, e.g. by way of a PLC program, and thereby the meaning, i.e. semantics of the information to be exchanged via the interface is hardcoded. All possible and/or wanted configurations need thus to be considered at the time of engineering. However, it turns out that is not possible to consider all possible system configurations, e.g., due to the fact that the automation system may be changed over time. Due to the fact that new automation components are added or existing automation components are updated changes of the configuration of the individual interfaces for information exchange may be necessary.

In addition, it is virtually impossible to determine the meaning and the interrelation at runtime of the automation component 101, 102, 300, 300a, 300b, 300c without any additional knowledge about the automation system 1, e.g. the specific product which is manufactured by the automation system 1. Such additional knowledge may be provided in standard specifications which may establish the semantic of the information exchanged by an automation component 101, 102, 300, 300a, 300b, 300c. Depending on the industry sector and/or the specific use-case different standards may exist that are tailored according to specific use-cases. Hence the situation may occur that automation components 101, 102, 300, 300a, 300b, 300c are preconfigured for the same use-case but according to different standards. For example, the same objects and functions of an automation system 1 may be described according to different standards and thus a different semantic may be used. This may even result in the extreme case that the same automation components 101, 102, 300, 300a, 300b, 300c, with respect to hardware and functionalities, may not be able to communicate with each other. For example, a filling line implementing the Pack ML (Packaging Machine Language) standard, created by Organization for Machine Automation and Control (OMAC) in conjunction with the International Society of Automation (ISA), may not be able to communicate with a filling line implementing the Weihenstephaner standard, created by Technical University of Munich, even though both describe communication interfaces for machine data acquisition in particular for connecting bottling and packaging plants.

The predetermined semantic of standards in general may lead to incompatibilities, e.g., due to new versions of a standard or in case a standard at least in part allows for a user-defined semantic of information. In case of such an incompatibility a change in the program code of an application software, such as a PLC program, of the one or more automation components may be necessary. For example, a renaming of a data point in a standard may lead to an intricate adaptation of the implementation of the application program of the one or more automation components 101, 102, 300, 300a, 300b, 300c of an automation system 1.

Once the semantic of information within an automation system 1 is determined no unknown information can be interpreted by the automation components of that system. At present, there is no mechanism for such automation components 101, 102, 300, 300a, 300b, 300c to interpret unknown information. Furthermore, automation components 101, 102, 300, 300a, 300b, 300c need to be programmed according to a common semantic and/or standard even though they serve different purposes or are assigned different tasks. In order to cover a plurality of use-cases this poses high demands to the semantic employed and e.g., requires a specific automation system 1 or component 101, 102, 300, 300a, 300b, 300c to implement additional interfaces for the purpose of exchanging information and to allow communication with a component 101, 102, 300, 300a, 300b, 300c or automation system 1 implementing a different semantic and/or standard.

With regard to the increasing flexibility and modularity of automation systems 1 and the need to allow automation systems 1 to interoperate according to the principle of plug and produce, the automation components 101, 102, 300, 300a, 300b, 300c need to be able to re-configure and to automatically adapt. In particular, autonomous systems, such as mobile robots, need to cover all possible types of interactions with cooperating automation components 101, 102, 300, 300a, 300b, 300c.

Still further, the fixed semantic of information exchanged with an automation component 101, 102, 300, 300a, 300b, 300c and/or within an automation system 1 does not allow for an exchange of higher level, i.e. more abstract, information, e.g. like a natural language or like a metalanguage. Therefor an expression in a natural language has to be explicitly formulated in in the semantics used by the automation system 1 and/or automation component 101, 102, 300, 300a, 300b, 300c.

Currently, automation systems 1 do not have the possibility to automatically derive and adapt the semantics for information exchange. For example, the address of a data point needs to be manually preconfigured even though the address is present and may be read from the engineering configuration.

Thus, in general the problem of interoperability in an automation system 1 or between automation systems and their components 101, 102, 300, 300a, 300b, 300c needs to be addressed.

A solution that enables an automatic enhancement of the understanding of the information within an automation system 1 is proposed. With the increase in computing capacities of today's automation components 101, 102, 300, 300a, 300b, 300c, such as controllers 101, the development of novel communication possibilities, and the use of complex algorithms is opening up new avenues.

Several of the embodiments throughout the present specification presuppose the OPC UA standard and use novel algorithms to address the technical issues listed above. Thus, in the following some embodiments will be described using OPC UA as an exemplary embodiment but other information models and mechanisms may be employed instead.

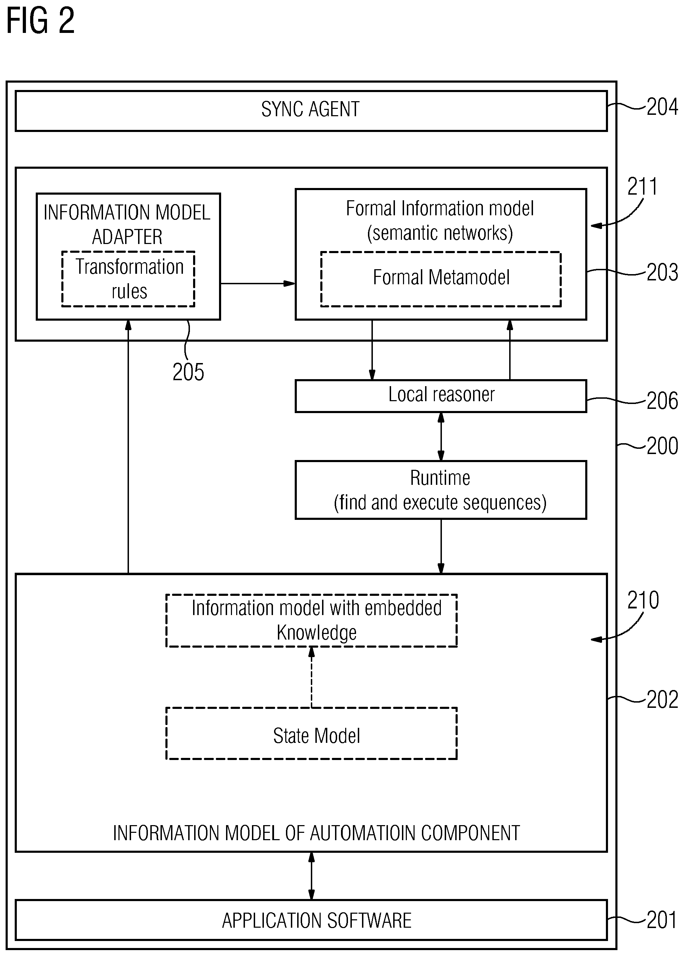

Now turning to Figure 2, a schematic illustration of an exemplary automation component 200 is shown.

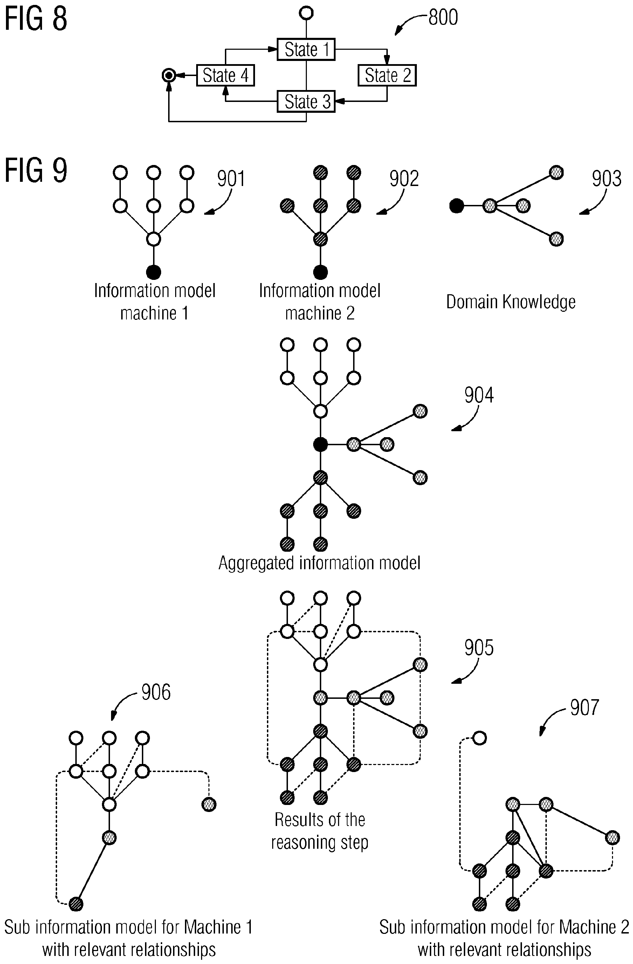

The automation component 200 may function in accordance with its application software 201. For example in the case of a PLC, an application software may be a PLC program which may be written using a special application on a personal computer, then downloaded by a direct-connection cable or over a network to the PLC. The program may be stored in the PLC, e.g., either in battery-backed-up RAM or some other nonvolatile flash memory. A PLC program generally loops i.e. executes repeatedly, as long as the controlled automation system is running. At the start of each execution loop, the status of all physical inputs are copied to an area of memory, sometimes called the "I/O Image Table", which is accessible to the processor. Similarly, the application software 201 of an automation component 200 governs the behavior of that automation component 200, for example with respect to the data consumption, data processing and/or data transmission. In another case the application software 201 may be the firmware of the automation component. It should also be understood that the automation component 200 itself may be software, i.e. a computer program. An exemplary state model 800 of an automation component is shown in Figure 8. Such a state model 800 may describe the possible states, e.g., State 1, State 2, State 3, State 4 of an automation component 200. The automation component 200 may loop trough States 1 to 4 and/or may halt after State 3 or 4. Hence the behavior of an automation component 200 may be described by such a state model, which may take the form of a state diagram or the like. The state model may be created or implemented according to a standard such as PLC Open or OPC UA. The knowledge of the possible states of an automation component may become necessary, e.g., for state description and decision-making. It should be understood, that state models of different automation components may also differ with respect to the number of states, possible state transitions and the with respect to the meaning of the states itself. The state model thus may be part of the information model 202 of the automation component 200. Based on one or more information models 202 of an automation component 200, e.g., an OPC UA information model, of one or more automation components an automatic knowledge acquisition, knowledge analysis and knowledge inference may be performed.

As will be explained in more detail later, after a transformation of the one or more information models 202 a semantic representation, i.e. in the form of a knowledge graph or another information model 203, e.g., in the form of an ontology, may be obtained. Based on this transformed information model 203 new knowledge may be generated.

First, however, OPC UA (OPC Unified Architecture) and its information model will be explained in more detail. Subsequently generation of the superordinate information model and generation of the local information model 203 will be explained.

OPC UA is an industrial standard protocol of the OPC Foundation for manufacturer-independent communication for the exchange of machine data, especially in automation technology. OPC UA is a standard where the focus is not on the control of an industrial plant rather in the standardized exchange of information, in particular between devices from different manufacturers. In the meantime, OPC UA is an established standard in automation technology and is integrated in a large number of automation components.

As explained in the above, a server 210 that can be called via the OPC UA communication protocol provides an information model. For example, the information model 202 of the automation component 200 may be an information model according to the OPC UA standard and may be accessible via an OPC UA server which is part of the automation component 200. This information model is no longer a hierarchy of folders, items, and properties. It is a so-called full mesh network of nodes with which, in addition to the payload data of a node, meta- and diagnostic information is represented, and wherein references that affect the relationships between the nodes are represented. A node of the information model resembles an object from the object-oriented programming.

The OPC UA address space can be considered as a kind of triple database, where the nodes (OPC UA Node) represent objects or data points and the edges (OPC UA references) relationships between the nodes. In this context, the Information model of an OPC UA server triplets in the form "subject predicate object", where a triple is an assertion in which the subject and object are relationship are set. Here, relationships are directed from subject to object and termed as predicate. Triples that refer to the same subjects or objects form a semantic network and thus store knowledge that can be analyzed. With this consideration, it is possible to map one or more semantic networks (knowledge) into the information model of an OPC UA server or vice versa. An OPC UA server can thus be considered as a knowledge base. It should be understood that the automation component may include both, an OPC UA server 210 and an OPC UA client 210.

In case the predicates of an information model represented by OPC UA references possess mathematical properties such as transitivity, reflexivity, domain, range, cardinality, etc., it is possible to use mathematical methods to analyze the networks represented in the information model. Hence, it is then possible to carry out complex queries on the information model, for example comparable to queries in a database, and automatically use logical deduction to gain new knowledge. An OPC UA client, as e.g., present in an automation component 200, equipped with these analytical capabilities, can analyze the semantics of the exchanged information at run time.

The OPC UA specification defines a number of reference types ("HasSubType", "HasType", HasProperty", etc...) as a fixed part of the standardized Address space models. By definition, some mathematical properties of these Reference types are implicitly defined. For example, the reference "HasSubType" is defined to be transitive. In addition, all reference types have standard attributes, which are indicative of their mathematical properties. For example, the attribute "Symetric" is used, for example, to indicate whether the meaning of the reference type for the source and is equal to the target node. Unfortunately, the OPC UA specification lacks the possibility to use new explicitly formulate properties of reference types besides the implicitly defined mathematical properties of reference types. The minimum and maximum cardinality, or the domain and the range of a reference type, for example, cannot be explicitly modeled. This not only increases the time it will take to automatically interpret knowledge, that is modelled in an information model, but it also increases the ambiguity and the inaccuracy of the interpretations found. In order to ensure consistency, of the information exchanged in automation systems and to clearly and quickly extract knowledge from it, it is necessary that the OPC UA references that express the predicates of the triple database, can be formally extended with mathematical properties. Although the OPC UA specification provides for query mechanisms, unfortunately, there are no mechanisms yet to analyze the semantics of an information model in order to derive knowledge from it.

In the following embodiments, the automation components 200 involved have an information model 202 (e.g. OPC UA information model), which contains knowledge of the behavior and characteristics of this automation component 200. For the definition of the behavior of an automation component 200 for example state diagrams, as e. g., shown in Figure 8, state-charts, petri-nets or a PLC Open compliant program may be used. For the definition of the properties of an automation component 200 predefined standards, e.g., OPC UA Companion specification, can be used. The information model 202 may be accessed via a server 210 (e.g. an OPC UA server) and (closely) coupled to the application software 201, e.g., a PLC program, in case the automation component is a PLC, of the automation component 200. Thus, an interpretation of the information model 202 provides insights about the execution of the application program 201, e.g., the PLC program.

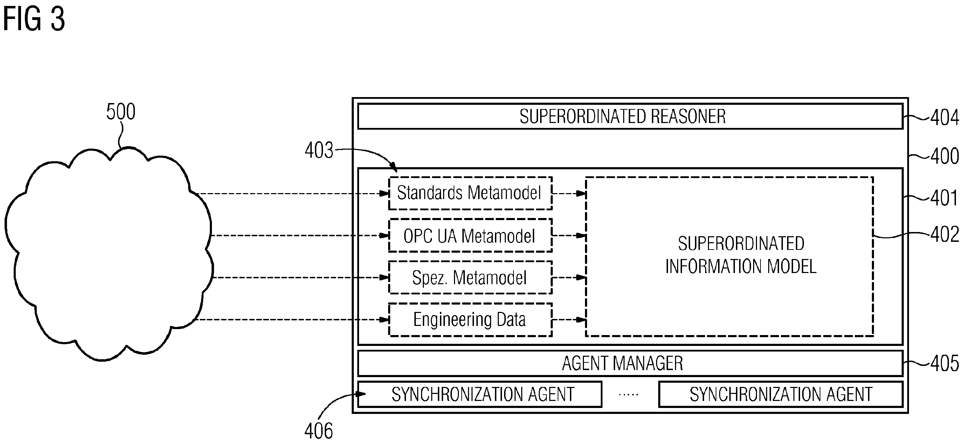

In addition, an interface is provided through which the execution of the application program 201, e.g., a PLC program, and thus the behavior of the automation component 200 can be influenced. For example, a server 210, e.g. an OPC UA server, may form an interface to external components, via which interface a client, e.g., an OPC-UA client, can acquire part of or the complete information model 202 at run-time and can interpret it. This information model 202 of the automation component 200 is usually located in a memory of the automation component 200, e.g., in a separate namespace which is reserved for the automation component, and may be created according to one or more standards (e.g. OPC UA Companion specifications). As will be seen in the following this information model 202 of the automation component 200 may serve as the basis for a local information model 203 and/or a superordinated information model 402, as e.g. shown in Figure 3.

An information model 202, such as the OPC UA information model, may be transformed at least in part and preferably bidirectionally using formally defined ontological rules and/or modelling rules into a formal ontological information model 203 and vice versa. An OPC UA information model of the automation component may be converted by a bi-directional transformation by the information model adapter 205 into a semantic network, i.e. into the format of a superordinated information model. Thus semantic network is also termed intermedia information model or local information model thought the present specification. The semantic network is then locally available, but is preferably connected via references with the superordinated information model. A method for transforming an information model for automation purposes into a target ontology is for example described in international application PCT/EP2018/081938. Hence, an integrative component 211 for automated acquisition of knowledge, knowledge analysis and knowledge inference within an automation system (including a PLC) is proposed. The integrative component 211 may in particular be based on the OPC UA standard. For example, the information model adapter 205 may be part of the integrative component 211, and/or may serve for creating the intermediate information model 203 based on the information model 202 of the automation component. This ontological information model 203 may be enhanced with external knowledge from other sources (e.g. engineering information, standards, Manufacturing Execution System (MES) information, etc...) in order to yield an extend semantic network, which covers multiple domains, and explicit expresses additional knowledge. To this end, the formal ontological information model 203 generated from the information model 202 of the automation component 200 may be transferred to automation component 400 as shown in Figure 3 in order to create an enhanced information model, i.e. superordinated information model, that comprises said additional knowledge. Logical thinking (e.g. by a superordianted reasoner 404 or mathematical graph operations) may be applied to the superordinated information model 402, in order to improve the semantic information model's domain knowledge, analyze the knowledge present and infer new knowledge from the semantic information model. This results in a closed semantic network in relation to the questions arising concerning one or more automation components 200 of automation system.

Generation of the ontological model 203 based on the information model 202 of the automation component 200 will now be described in more detail. The complete information model 202 (or only a part thereof), e.g. of an OPC UA server 210, of an automation component 200 may be read by an information model adapter 205. The information model adapter 205 is preferably also located on the automation component 200 and may apply predefined transformation rules to the information model read, in order to generate a formal ontology (e.g. OWL, RDF), which is then stored, e.g. in a formal information model 203. This formal information model 203 may be based on a formal metamodel. This formal information model 203, also denoted as formal ontology, may make use of triples, as explained in the above, in order to store information. The result may for example be a semantic graph (which however may still be regarded as incomplete) but due to its formal properties allows the application of formal methods like mathematical operations. This intermediate information model 203 may contain references to metamodels and domain knowledge of the standards on which the information model of the automation component is derived from.

For the transformation of the information model 202 of the automation component 200, the information model adapter 205 and the associated transformation rules are based on the fact that all OPC UA information models make use of the OPC UA base namespace (http://opcfoundation.org/UA/). Determining a transformation of the (basic) elements of this namespace into a formal ontology e.g. OWL, allows transforming all possible OPC UA information models into this formal ontology. In addition to this, an OPC UA address space - which always implements the OPC UA basic namespace - an adapter database is created, in which the nodes (OPC UA Node) represent objects, variables, properties and methods and the edges (OPC UA references) represent relationships between the nodes. In this context an OPC UA information model of an OPC UA server 210 stores triplets in the form "Subject-predicate object", where a triple represents an assertion in which the subject and the object are related to each other. Subjects here signify OPC UA Node and Predicates signify OPC UA references. Since the OPC UA base namespace has a number of references ("HasSubType", "HasType", HasProperty, etc.) and nodes as fixed part of the standardized address space model, it is sufficient for a transformation into a formal ontology that these basic components are defined in the target ontology. Thus, the transformation may be a one-to-one mapping of the instances of the building blocks of the OPC UA information model and their representation in the target ontology. The transformation rules may thus comprise at least all the rules of this one-to-one mapping. The entirety of the definitions of the basic building blocks of target ontology forms the basic information model on which the resulting semantic information model 203 will be based.

The definition of the mathematical properties of the basic building blocks mapped into the formal ontology may be based on the specification of the OPC UA base namespace and the OPC UA address space. Part of the mathematical properties of these basic building blocks are implicitly defined. For example, the reference "HasSubType" is defined as transitive. In addition, all basic building blocks of the OPC UA base namespace possess standard attributes that also provide information about their mathematical properties. For example, the "symetric" attribute is used to indicate whether the meaning of a reference type is the same for the source node and the destination node.

At the end of the transformation described above, a semantic network is created, which expresses the knowledge embedded in the OPC UA information model 202 in a formal ontology 203. However, this semantic network may be insufficient as it still includes references to the different standards that express the specific knowledge of the application, e.g. above mentioned OPC UA Companion standards. Now this intermediate information model 203 of the formal ontology may be enhanced with domain knowledge of the various applied standards and/or with the information models of at least one other automation component. For this purpose, the contents of the information model are transferred to a central knowledge mapper 401, as shown in Figure 3. The transfer may be carried out using the synchronization agent 204, which is also implemented in the automation component 200 or its proximity. The synchronization agent 204 may be in cooperation with a corresponding synchronization agent 406.

Now turning to Figure 3 a knowledge mapper 401 may be an instance that is communicatively connected to the automation system, e.g., with a direct connection to one or more automation components or may be located in a remote system, e.g. a cloud. The knowledge mapper 401 may comprise a superordinated information model 402 where the information models of the different automation components are collected. An exemplary example of generating a superordinated information model by mapping of the different information models is provided in Figure 9.

The knowledge mapper 401 may also import the metamodels 403 of the referenced standards (or other ontologies such as derived from engineering tools) and form a semantic network, i.e. superordinated information model 402, which combines the knowledge of the information models of the automation components and the corresponding domain knowledge. The metamodels 403 of the referenced standards can be stored in the superordinated information model adapter 402, or imported during runtime from external sources 500. The latter has the advantage that new versions of a metamodel 403, e.g., of a referenced standard, can be easily integrated. Each node of the resulting mesh of a metamodel 403 or the superordinated information model 402 may additionally be annotated with information regarding its origin (from the information model of which metamodel or automation component information model it comes from). It should be understood that the metamodels 403 may need to be transferred into the formal ontology of the superordinated information model 402 thereby allowing the integration of the one or more metamodels 403 into the superordinated information model 402.

After the collected information models have been merged and became part of the superordinated information model 402, i.e. the semantic network, a superordinated reasoner 404 may be applied. This superordinated reasoner 404 has the task of analyzing and/or expanding the resulting superordinated information model 402, i.e. semantic network. Such an analysis may remove redundant information, may generate new relationships between existing nodes of the network and thus generate new knowledge. The knowledge inference may be based only on the mathematical properties of the predicates in the superordinated information model 402. If, for example, a predicate r is transitive and there are three nodes a, b and c, so that the following relationships (triple) are true: a r b and b r c, one can without violating the expressive power of the superodinated information model 402 create the following relationship (triple): a r c. In this way, the superordinated information model 402 may be gradually expanded.

At the end of this analysis and/or extension, the superordinated information model 402 may contain additional automation component knowledge and/or imported domain knowledge. The new knowledge expresses the relationships between the between the imported models and the information models from the automation components. Similarly, the relationship between the different standards may be inferred.

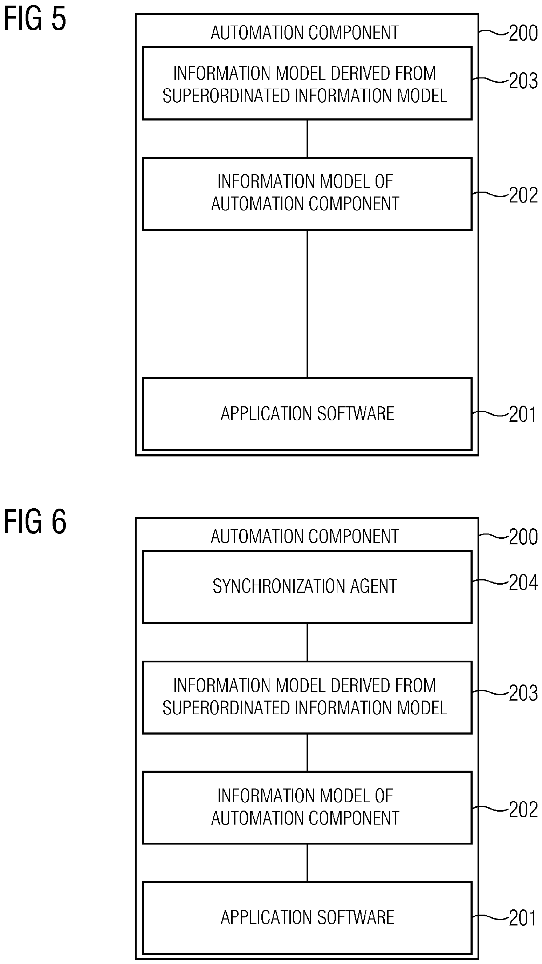

The superordinated information model 402 is self-contained, i.e. queries of the entire superordianted information model 402 (which forms a semantic network) are possible (without having to import an ontology first). At this point, one is able to answer questions of or make decisions for an automation component based on the knowledge encoded in the semantic network. For exemplary purposes, the incompatibility between the PackML standard and the OMAC standard are considered as shown in Figure 6. A data point in PackML that represents a product counter, can be identified with its representation in the Weihenstephaner standard by tracking the resulting equivalence relations. Thereby enabling automation components that are implemented according to different standards to interoperate.

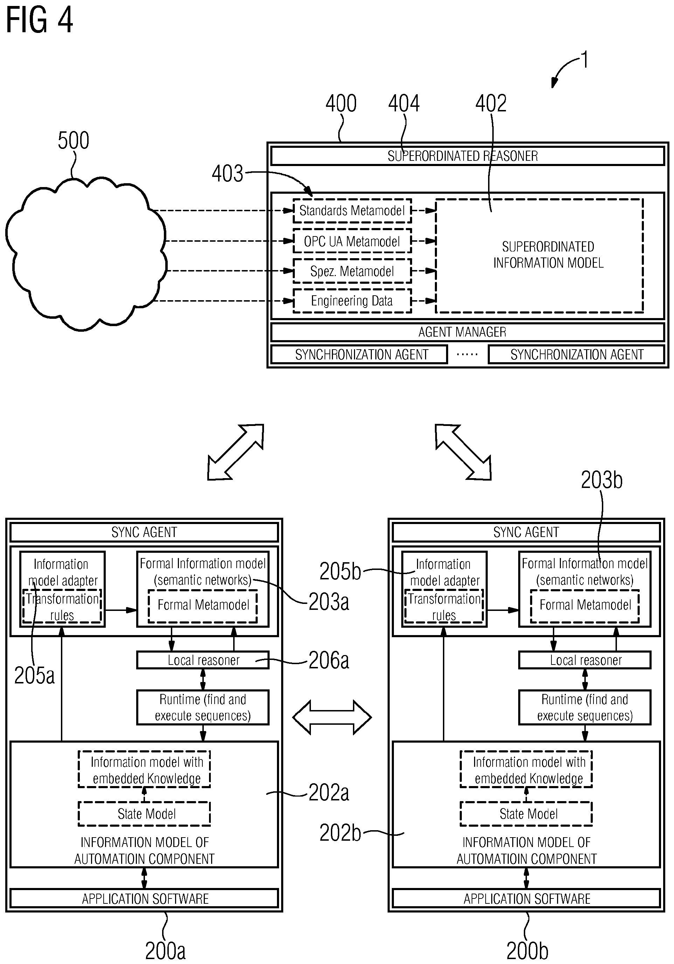

Now turning to Figure 4, the extended semantic information model, also called superordinated information model 402, which is present e.g., in the form of a network, may be distributed in such a way that the questions of the different automation components 200a, 200b, 400 of the automation system 1 can be solved locally and the interaction between the automation components 200a, 200b, 400 is minimized. To this end, the semantic network, i.e. the superordinated information model 404, may be reduced into multiple parts which are distributed to one or more automation components 200a, 200b of the automation system 1. These parts may then correspond to said local information model.

Thus, in order to facilitate communication between the automation components 200a, 200b, 400 and the superordinated information model 402, the superordinated information model 402 that implements a semantic network may be reduced and/or divided into individual parts that are relevant for the respective automation components 200a, 200b. This results in a reduced semantic network (for each automation component), with which all the questions of the respective automation component 200a, 200b can be answered. This reduced information model may then be transferred to the information model adapter 205a, 205b, e.g. the memory, of the corresponding automation component 200a, 200b. This division and the transfer of the reduced network to the local information model 203a, 203b offers the advantage that the questions of the respective automation component 200a, 200b can be answered quickly and locally. The division and/or the reduction of the semantic network and the transmission of the reduced network 203a, 203b on the respective automation components 200a, 200b may be executed by an agent manager 405, which, in addition to the managing the superordinated information model 402, may manage multiple synchronization agents 406 that are responsible for synchronization of the superordinated information model 402 with the respective local information model 203a, 203b.

Since not all questions of an automation component 200a, 200b may be precisely defined before their use, a voting and cache mechanism may be applied for the division and transmission of the semantic network. At the beginning, all questions of an automation component are presented to the superordinated reasoner. For answering the questions, the superodinated reasoner determines relationships within the superordinated information model forming the semantic network and stored the information, e.g. the triples, that were needed to answer the question and/or provide a decision. A voting table may be provided, that stores the number of times a certain triple was applied. The agent manager 405 then may select the triples that were used most frequently for answering the questions of an automation component 200a, 200b and may transmit them (or the part of the superordinated information model corresponding to those triples) to the local information model adapter of the respective automation component. Hence, questions of the automation component 200a may then be solved locally with a local reasoner 206. In case the local reasoner 206 cannot answer a question with the local information model 203, the corresponding query may be applied by the superordinated reasoner 404. After answering the question, the voting table may then be updated correspondingly and/or the automation component 200a, 200b may be updated with the new triples (or the part of the superordinated information model 402 corresponding to those triples) found.

As shown in Figure 5, the automation component 200 then may comprise local information model 203, which is derived from the superordinated information model. The questions arising and concerning the automation component 200 and/or the automation system can then be converted in one or more queries of the distributed semantic network and then be solved either centrally or locally, e.g., by the use of "Federated Search" mechanisms, i.e. by simultaneously searching the local information model of multiple automation components.

As mentioned in the above, one or more questions arising locally, i.e. within one automation component 200a, may thus be answered or decided locally, i.e. by the same automation component 200, since the automation component 200a comprises part of the semantic information model that comprises information necessary to answer questions related to the information component. That is to say, automation component 200a comprises an information model 203 derived from the superordinated information model. Hence, system incompatibilities can be solved locally where the respective information is located and needed.

For example, by distribution of the superordinated information model and/or parts of it, respectively, the communication between automation components that are used during the resolution of a question (e.g. for condition description and decision-making) may be minimized. In addition, a semantic consistency check of the exchanged information between automation components may be performed. Another benefit is that a complete semantic interoperability between automation components may be achieved.

A formally defined ontological and integrative model set of rules that allows the application of logical thinking is proposed. Such an enhanced information model (corresponding to at least part of a superordinated information model) may be stored (directly) on an automation component 200, such as a PLC. Thereby use of mathematical methods for semantic and automated analysis of exchanged information between automation components of one or more automation systems is enabled. This allows an automated check of the semantic's consistency of the information exchanged at runtime, and also an automated extraction of the importance of the information exchanged. Based on this an inference of new knowledge (e.g. conclusions) that are not explicitly modeled in the information model is enabled. The previously manually hard-coded a-priori application specific knowledge of the predefined interfaces for information exchange and the interpretation of the exchanged process information can now be fully automatized across multiple versions of information models, e.g. at runtime, in particular within a PLC. Similarly, the interaction of multiple PLCs, can be aligned automatically.

Further advantages include, that information and questions can be answered as close as possible to the location of the data generated, i.e. on the automation component. Questions relating to the interaction between the automation components, such as M2M interaction, may be formally and/or semantically, and in particular independent of the lower-level standard, described. This also allows for reusability of the semantic network, i.e. at least part of the superordinated information model which is based on the semantic network. Furthermore, the orchestration of the semantic representation and questions leads to a reduction of the communication load compared to a centralized solution and a distribution of the computational load, as well as to a faster response time for questions. Changes relating to the configuration of the one or more automation components and/or the automation systems can be reflected and by way of adapting the local and/or the superordianted information models. To this end, an automation component 200 may comprise a synchronization agent 204, as shown in Figure 6, that e.g., receives part of the superordinated information model and stores it in the automation component. In addition, transparency by using the voting mechanism when it comes to the distribution of the reduced part(s) of superordinated information model is provided. Also, the distribution of tasks and the computational load may be easily adjusted by manipulating the voting mechanism.

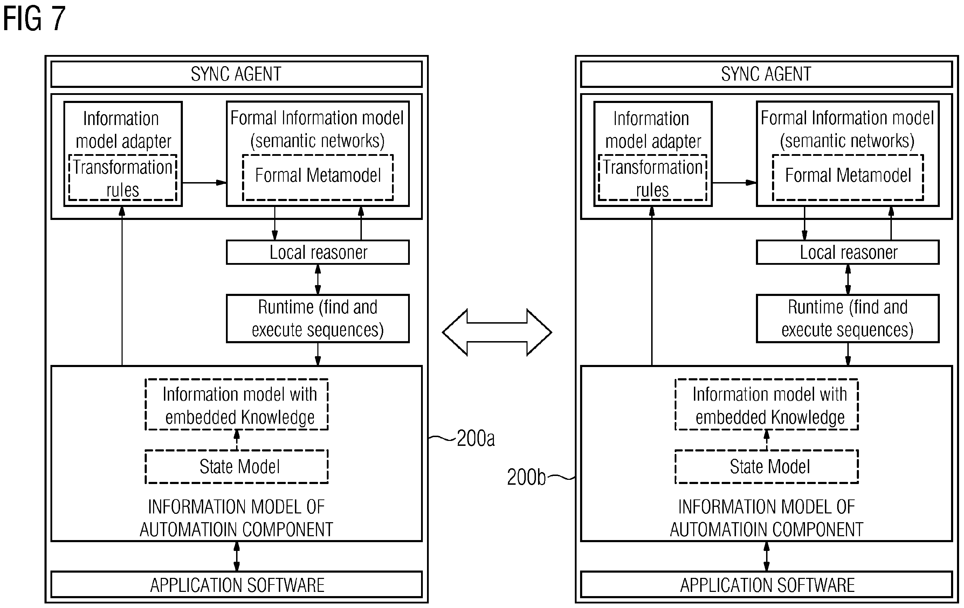

Now turning to Figure 7, the procedure is explained in more detail by means of another example. If two automation components 200a, 200b have to interact with each other (e.g. a material flow by coordinating the speed to be coordinated), this is now only possible for explicitly tuned interfaces. For example, it is assumed that two machines are generally compatible, but the implementation of interfaces different OPC UA Companion standards. In addition, a superordinated information model may contain further information regarding these automation components (e.g. engineering-information, metamodels of specifications, etc.). In order to still enable an interaction, one or more of the following steps may be performed:
Now, for example, if a requirement from an MES exists, that two automation components 200a, 200b shall take the same condition (e.g. productive) and their speeds need to be synchronized a corresponding request to the superordinated reasoner may be generated. In this case, an equivalence between the corresponding parameters and states needs to be determined to allow for a parameter exchange and synchronization of the automation components 200a, 200b. By deduction, the overall model is now expanded with new knowledge. If sufficient information is available, the required equivalence relations can be found (e.g. this could be achieved with the help of engineering information from e-plans, common elements in the metamodels of the specifications, construction plans, or behavioral specifications). The newly generated information is distributed in such a way that the required communication at run time is minimized (e.g. speed parameters to be replaced should be available locally).

A retransformation of at least part of the superordinated information model into the information model 203a, 203b of the automation component 200a, 200b, e.g. the OPC UA model, allows to establish a direct communication between the automation components 200a, 200b.

In Figure 8 an exemplary state model of an automation component is shown. As explained in the above a state model represents the behavior of an automation component.

Now turning to Figure 9, the mechanism of creating a superordinate information model 905, knowledge inference and division of the superordinated information model is shown. An intermediate information model 901 of a first automation component and an intermediate information model 902 of a second automation component, e.g. of automation components 200a and 200b of Figure 4 or 7 are provided. These information models 901, 902 may be based on the information models of the automation components, and/or may be generated, as described in the above, using an information model adapter. In addition, additional knowledge 903 -termed domain knowledge in Figure 9 - relating to the automation components may be provided in the same ontological format, e.g. comprising a metamodel of a standard as shown in particular in Figure 3. These information models 901, 902. 903 may be merged in an aggregated information model 904. Furthermore, knowledge can be inferred from the aggregated information model 904, e.g. by applying reasoning or other mathematical functions. The result then may be a superordinated information model 905 comprising the results of such reasoning. The reasoning can thus result in the identification of parameters corresponding to each other in the different intermediate information models 901, 902, 903. That is to say, a parameter representing the same information in the information model 901, 902 of the first and second automation component even though the information models of the automaton components do not coincide. Subsequently the superordinated information model 905 may be divided in order to distribute the relevant knowledge to the individual automation components. Hence, a first local information model 906 may be formed that is distributed to the first automation component and a second local information model 907 may be formed that is distributed to the second automation component. The first local information model 906 may comprise additional information relating to the second automation component and relating to the domain knowledge, represented by the dotted lines in Figure 9. The second local information model 907 may comprise additional information relating to the first automation component and relating to the domain knowledge, also represented by dotted lines in Figure 9. The automation components may thus be operated in accordance with the respective local information models. Thereby an interoperability of the automation components may be achieved.

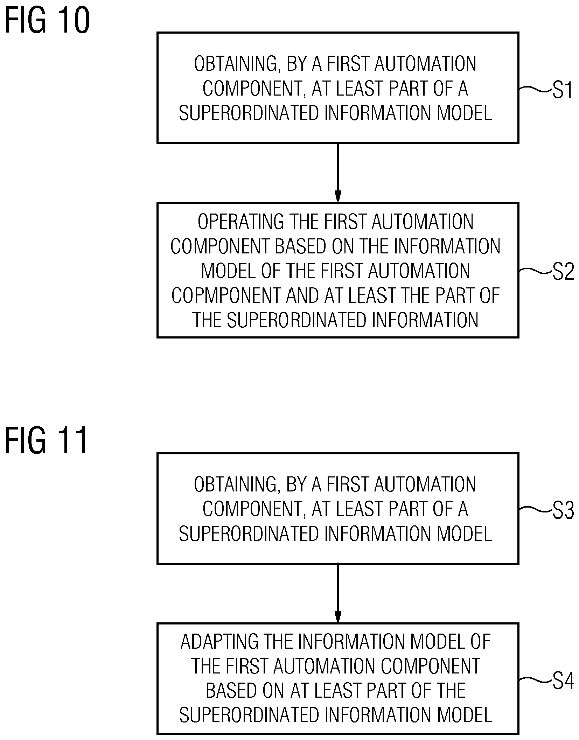

Now turning to Figure 10, exemplary method steps are shown. In a first step S1 at least part of a superordinated information model is obtained by a first automation component. The at lest part of the superodinated information model may be transmitted to the first automation component, e.g. from an automation component hosting the at lest part of the superordinated information model. The transfer may be initiated by the automation component by requesting at lest part of the superordinated information model, e.g. because the presence of another automation component with which interoperability needs to be established. The superordinated information model may be based on the information model of the first automation component and on an information model comprising external knowledge associated with the first automation component and/or an information model of at least one second automation component.

In a second step S2 the first automation component is operated based on the at least part of the superordinated information model. As this superordinated information model comprises the information model of the first automation component the first automation component is also operated based on the information model of the first automation component. As the at least part of the superordinated information model may be transformed into the information model of the first automation component the first automation component is operated in connection with its application software and the information model of the first automation component and/or the superordinated information model.

Now turning to Figure 11, further exemplary method steps are shown. In a step S3 at least part of the superordinated information model is obtained by the first automation component. Herein step S3 may correspond to step S1. The at least part of the superordinated information model may be received from a second automation component. In a subsequent step S4 the information model of the automation component is adapted based on the at least part of the superordinated information model. Step S4 may be performed in between step S1 and S2.

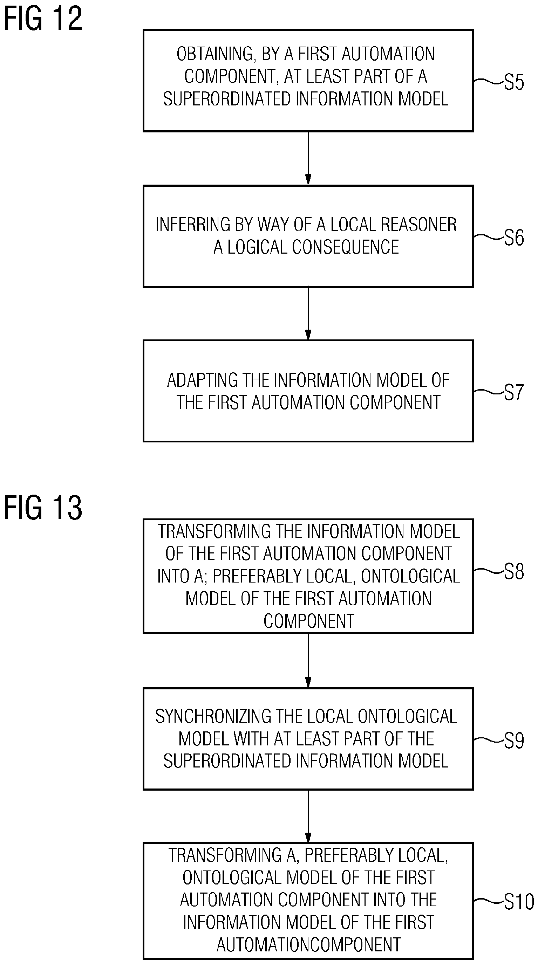

Now turning to Figure 12, further exemplary method steps are shown. In a step S5 at least part of the superordinated information model is obtained by the first automation component. Herein step S5 may correspond to step S1. In a subsequent step S6 a logical consequence may be inferred based on the at least part of the superordinated information model. To this end, a reasoner may be present of the automation component, wherein the reasoner serves for querying at least the part of the superordinate information model and serves for inferring a logical consequence, e.g., based on inference rules given in an ontology language. The logical consequence inferred may be used to adapt the at least part of the superordinated information model. Then, in a subsequent step S7 the information model of the automation component is adapted based on the at least part of the superordinated information model. Step S7 may thus correspond to steps S4.

Now turning to Figure 13, further exemplary method steps are shown. In a step S8 the information model of the first automation component is transformed into a preferably local ontological model of the first automation component. This information model has been denoted intermediate information model in the above specification, as, e.g., according to some embodiments, it is used to build the superordinated information model. In a subsequent step S9 the local ontological model is synchronized with the at least part of the superordinated model. For example, if the at least part of the superordinated information model comprises additional information (compared to the intermediate information model created in step S8) the at least part of the superordinated information model is transmitted to the automation component so that the local information model of the automation component is updated. In general, a synchronization and/or update of the local ontological model may be performed, i.e. independent of whether a step S8 has been performed immediately before step s9. In a subsequent step S10 the local ontological model, i.e. the at least part of the superordinated information model received, of the first automation component may be transformed into the information model of the first automation component. Subsequently the automation component may be operated, e.g. in accordance with step S2.

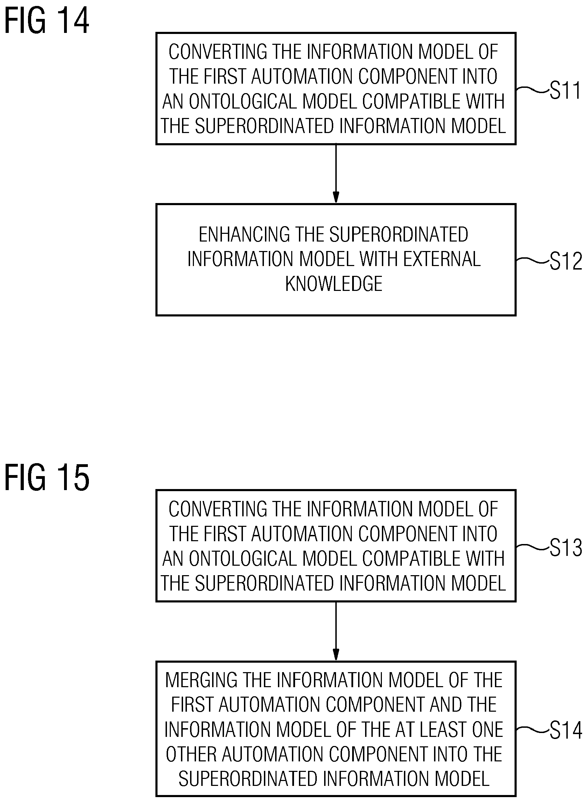

Now turning to Figure 14, in a step S11 the information model of the first automation component may be converted into an ontological model compatible with the superordinated information model. In a subsequent step S12 the superordinated information model may then be enhance with external knowledge. Preferably the external knowledge is also present in a common format, i.e. the format of the superordinated information model and the format of the converted information model of the automation component.

Now turning to Figure 15, in a step S13 the information model of the first automation component may be converted into an ontological model compatible with the superordinated information model. In a subsequent step S14 the information model of the fist automation component and the information model of at least one other automation component may be merged into the superordianted information model. As described in the above, e.g., in accordance with step S8 or step S11, the information models of the first and second automation component may first be transformed into an ontological model.

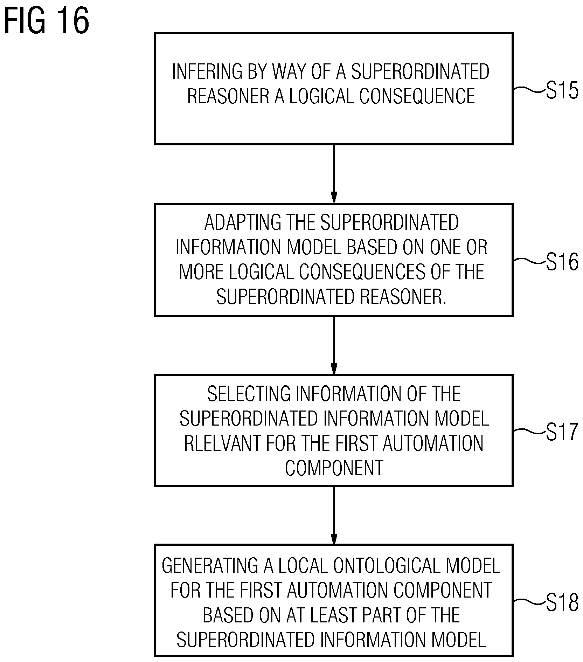

Now turning to Figure 16, in a step S15 a superordinated reasoner may infer a logical consequence, for example the superordinate reasoner serves for querying at least the part of the superordinate information model and serves for inferring a logical consequence, e.g. based on inference rules given in an ontology language. In a subsequent step S16 the superordinated information model may be adapted based on one or more logical consequences determined by the superordinate reasoner. In a further step S17 information of the superordinated information model relevant for the first automation component, or for another automation component, as the case may be, may be selected. In a subsequent step S18 a local ontological model for the first automation component, or for another automation component, as the case may be, may be generated, e.g. based on the superordinated information model and the information selected, e.g. in step S17. Steps S16, S17 and S18 may be performed by the agent manager as shown in Figure 3.

## Claims

1. A first automation component (200a), the first automation component (200a)
comprising:
an information model (202a) of the first automation component (202a) and at least a part (203a) of a superordinated information model (402), e.g. a local information model derived from the superordinated information model (402),
wherein the superordinated information (402) model is based on the information model (202a) of the first automation component (200a) and on an information model (403) comprising external knowledge associated with the first automation component (200) and/or an information model (202b) of at least one other automation component (200b), and
wherein the first automation component (200a) is operable based on the information model (202a) of the first automation component (200a) and at least the part (203a) of the superordinated information model (402).

2. A first automation component (200a) according to the preceding claim,
wherein the information model (202a) of the first automation component (200a) represents a state model (800) of the first automation component (200a) and semantic information relating to the first automation component (200a), and/or
wherein the superordinated information model (402) is an ontological model, and wherein the ontological model is based at least on the information model (202a) of the first automation component (200a), wherein preferably the information model (202a) of the first automation component (200) is converted into the ontological model.

3. A first automation component (200a) according to any one of the preceding
claims,
wherein the external knowledge (403) comprises information, e.g. in the form of at least one ontological model and/or at least one metamodel, of a technical description, e.g. of a technical standard and/or an engineering parameter set, associated with the at least one first automation component (202a) and/or
wherein the superordinated information model (402) is based on an information model (202b) of at least one other automation component (200b) and/or on external knowledge (403) relating to the at least one other automation component (200b), and wherein the information model (202a) of the first automation component (200a) and the information model (202b) of the at least one other automation (200b) component is merged into the superordinated information model (402), and/or
wherein the information model (202a) of the first automation component (200a) on the first automation component (200a) is communicatively coupled to at least the part of the superordinated information model (402), e.g. via a server component.

4. A first automation component (200a) according to any one of the preceding
claims,
wherein the first automation component (200a) comprises a reasoner (206a), wherein the reasoner (206a) serves for querying at least the part (203a) of the superordinate information model (402) and serves for inferring a logical consequence, e.g., based on inference rules given in an ontology language.

5. A first automation component (200a) according to any one of the preceding
claims,
wherein the first automation component (200a) comprises a transformation component for transforming the information model of the first automation component (200a) into a, preferably local, ontological model of the automation component, and/or
wherein the transformation component serves for transforming the, preferably local, ontological model of the first automation component (200a) into the information model of the first automation component (200a), and/or
wherein the first automation component (200a) comprises a synchronization component for synchronizing the local ontological model with at least part of the superordinated information model (402), wherein in particular the superordinated information model (402) is located in a memory of at least one second automation (400) component.

6. A second automation component (400), the second automation component
comprising:
a superordinated information model (404), wherein the superordinated information model (402) is based on an information model (202a) of a first automation component (200a) and on an information model (403) comprising external knowledge associated with the first automation component (200a) and/or an information model (202b) of at least one other automation component (200b).

7. A second automation component (400) according to the preceding claim, the
second automation component (400) comprising a superordinated reasoner (404), wherein the superordinated information model (402) is communicatively coupled to the superordinated reasoner (404), which superordinate reasoner (404) serves for querying at least the part of the superordinate information model (402) and serves for inferring a logical consequence, e.g. based on inference rules given in an ontology language, and/or
wherein the superordinated information model (402) is adapted based on one or more logical consequences of the superordinate reasoner (404).

8. A second automation component (400) according to any one of the preceding
claims 6-7,
wherein a local ontological model for the first automation component (200a) is generated based on at least part of the superordinated information model (402) and wherein the local ontological model is transmitted to the first automation component (200a), and/or
wherein the local ontological model comprises a selection of information of the superordinated information model (402) relevant for the first automation component (200a).

9. A second automation component (400) according to any one of the preceding
claims 6-8,
wherein the second automation component (400) is a or located on a programmable logic controller, an edge device or a cloud platform.

10. An automation system (1) comprising at least a first automation component
(200a) and at least a second automation component (400) according to any one of the preceding claims,
wherein a plurality of automation components, e.g. according to any one of the preceding claims, are communicatively coupled to the superordinated information model (402).

11. A method for operating a first automation component (200a), preferably for
providing interoperability of the first automation component (200a) with another automation component (200b), comprising the steps of:
obtaining (S1) at least part of a superordinated information model (402), e.g. a local information model derived from the superordinated information model, wherein the superordinated information model (402) is based on an information model (202a) of the first automation component (200a) and on an information model (403) comprising external knowledge associated with the first automation component (200a) and/or an information model (202b) of at least one other automation component (200b),
operating the first automation component (S2) based on the information model (202a) of the first automation component (200a) and at least the part (203a) of the superordinated information model.

12. The method of claim 11 further comprising the step of:
adapting the information model (202a) of the first automation component (200a) based on at least part of the superordinated information model (203a),
wherein the information model (202a) of the first automation component (200a) represents a state model (800) of the first automation component (200a) and semantic information relating to the first automation component (200a), and/or
converting the information model (202a) of the first automation component (200a) into an ontological model compatible with the superordinated information model (402), and/or
enhancing the superordinated information model (402) with external knowledge, e.g. in the form of at least one ontological model and/or at least one metamodel of a technical description, e.g. of a technical standard and/or an engineering parameter set, associated with the at least one first automation component (200a).

13. The method of claims 11-12 further comprising the step of:
merging the information model (202a) of the first automation component (200a) and the information model (202b) of the at least one other automation component (200b) into the superordinated information model (402), and/or
inferring by way of a superordinate reasoner (404), wherein the reasoner serves for querying at least the part of the superordinate information model (202), a logical consequence, e.g. based on inference rules given in an ontology language, and/or
transforming the information model (202a) of the first automation component (200a) into a, preferably local, ontological model of the first automation component and/or
transforming a, preferably local, ontological model of the first automation component (200a) into the information model (202a) of the first automation component (200a), and/or
synchronizing the local ontological model (203a) with at least part of the superordinated information model (402).

14. The method of claims 11-13 further comprising the step of:
inferring by way of a superordinated reasoner (404), which superordinate reasoner (404) serves for querying at least the part of the superordinate information model (402), a logical consequence, e.g. based on inference rules given in an ontology language, and/or
adapting the superordinated information model (402) based on one or more logical consequences of the superordinate reasoner (404), and/or
generating a local ontological model (203a) for the first automation component (200a) based on at least part of the superordinated information model, and preferably transferring the local ontological model (203a) to the first automation component (200a), and/or
selecting information of the superordinated information model (402) relevant for the first automation component (200a) and generating a local ontological model (203a) comprising said selected information.

15. Apparatus operative to perform any one of the method steps of any one of the
claims 11 to 14.
